# FASCICULE DE BREVET EUROPEEN

(11) **EP 3 456 566 B1**
(45) Date de publication et mention de la délivrance du brevet: **06.01.2021**
(21) Numéro de dépôt: 18195502.2
(22) Date de dépôt: 19.09.2018
(51) Int. Cl.: B60J 5/12, B60J 5/14, B60J 10/244

(54) **PORTE SECTIONNELLE POUR COMPARTIMENT DE TRANSPORT DE MARCHANDISE, COMPARTIMENT ET VÉHICULE DE TRANSPORT DE MARCHANDISES ASSOCIÉS**
BRANDSCHUTZTÜR FÜR WARENTRANSPORTABTEIL, ENTSPRECHENDES ABTEIL UND TRANSPORTFAHRZEUG FÜR DEN WARENTRANSPORT
SECTIONAL DOOR FOR GOODS TRANSPORT COMPARTMENT, ASSOCIATED COMPARTMENT AND VEHICLE FOR TRANSPORTING GOODS

(30) Priorité: 19.09.2017 FR 1758661
(43) Date de publication de la demande: 20.03.2019
(60) Demande divisionnaire: 20208419.0
(73) Titulaire: Lecapitaine Industrie, 50000 Saint Lô (FR)
(72) Inventeur: YBERT, Florentin, 50800 FLEURY (FR); GILLES, Loïc, 14000 CAEN (FR)
(74) Mandataire: Lavoix

(56) Documents cités:
- EP-A1- 1 006 013
- FR-A1- 2 267 499
- FR-A1- 2 613 986
- JP-U- S5 068 426
- US-A1- 2015 068 686

## Description

La présente invention concerne une porte sectionnelle pour compartiment de transport de marchandise, du type comprenant un encadrement encadrant une ouverture, et un tablier formé d'une pluralité de lamelles successives articulées les unes aux autres et monté mobile relativement à l'encadrement entre une position de fermeture, dans laquelle il obture l'ouverture, et une position d'ouverture, dans laquelle il est à l'écart de l'ouverture.

L'invention concerne également un compartiment de transport de marchandises comprenant une telle porte sectionnelle pour sélectivement ouvrir et fermer une ouverture d'accès à l'intérieur de ce compartiment, et un véhicule de transport de marchandises comprenant un tel compartiment.

Des portes sectionnelles du type précité sont connues, notamment de EP 3 112 195 A1 et FR 2 613 986 A1. Elles sont généralement utilisées pour sélectivement ouvrir et fermer une ouverture d'accès à l'intérieur d'un compartiment de transport de marchandises du véhicule. Elles comportent le plus souvent un système de motorisation électrique ou pneumatique permettant de déplacer le tablier entre ses positions d'ouverture de fermeture.

Les portes connues ne donnent toutefois pas entière satisfaction. En effet, de manière à éviter les frottements entre le tablier et l'encadrement, il est généralement prévu un jeu entre ces deux éléments. Or, il arrive souvent que, du fait de ce jeu, le tablier vibre sous l'effet des sollicitations mécaniques et aérodynamiques auxquels il est soumis lors du transport, entraînant une usure accélérée des pièces. En outre, ce jeu est très préjudiciable lorsque le compartiment est réfrigéré, puisqu'il entraîne des fuites thermiques importantes nécessitant une consommation d'énergie excessive pour maintenir la température désirée à l'intérieur du compartiment.

Il a certes été proposé d'installer un joint sur l'encadrement, à la périphérie de l'ouverture, de manière à combler ce jeu. Pour limiter le frottement du tablier contre ce joint lors de son déplacement, il a été prévu de positionner le rail de guidage du tablier de manière inclinée par rapport au joint, de sorte que le tablier ne prenne appui contre le joint qu'en fin de déplacement. Toutefois, une telle solution est complexe à mettre en œuvre, en raison notamment de la nécessité de régler précisément la position des organes de guidage de chaque section. En outre, cette solution ne résout pas les problèmes de vibration.

Un but de l'invention est d'améliorer, de manière simple et reproductible, l'étanchéité entre l'encadrement et le tablier d'une porte sectionnelle. D'autres objectifs sont de réduire les risques de prise en glace du tablier sur l'encadrement lorsque la porte sectionnelle équipe un compartiment réfrigéré, de supprimer les vibrations du tablier, et de supprimer les efforts de frottement entre le joint et le tablier à l'ouverture et à la fermeture de la porte.

A cet effet, l'invention a pour objet un compartiment de transport de marchandises selon la revendication 1.

Selon des modes de réalisation particulières de l'invention, le compartiment de transport de marchandises présente en outre l'une ou plusieurs des caractéristiques des revendications 2 à 6, prise(s) isolément ou suivant toute(s) combinaison(s) techniquement possible(s).

L'invention a en outre pour objet un véhicule de transport de marchandises comprenant un compartiment tel que défini ci-dessus.

D'autres caractéristiques et avantages de l'invention apparaîtront à la lecture de la description qui va suivre, donnée uniquement à titre d'exemple et faite en se référant aux dessins annexés, dans lesquels :
- la Figure 1 est une vue de côté d'un véhicule de transport de marchandises selon l'invention,
- la Figure 2 est une vue en perspective de l'arrière du véhicule de transport de marchandises de la Figure 1,
- la Figure 3 est une vue en perspective d'une coupe horizontale de l'arrière du véhicule de transport de marchandises de la Figure 1, prise selon un plan marqué III-III sur la Figure 2,
- la Figure 4 est une vue en coupe verticale de l'arrière du véhicule de transport de marchandises de la Figure 1, prise selon un plan marqué IV-IV sur la Figure 2, et
- la Figure 5 est une vue en perspective de l'extrémité inférieure d'un joint gonflable du véhicule de transport de marchandises de la Figure 1, ledit joint gonflable étant en position de repos.

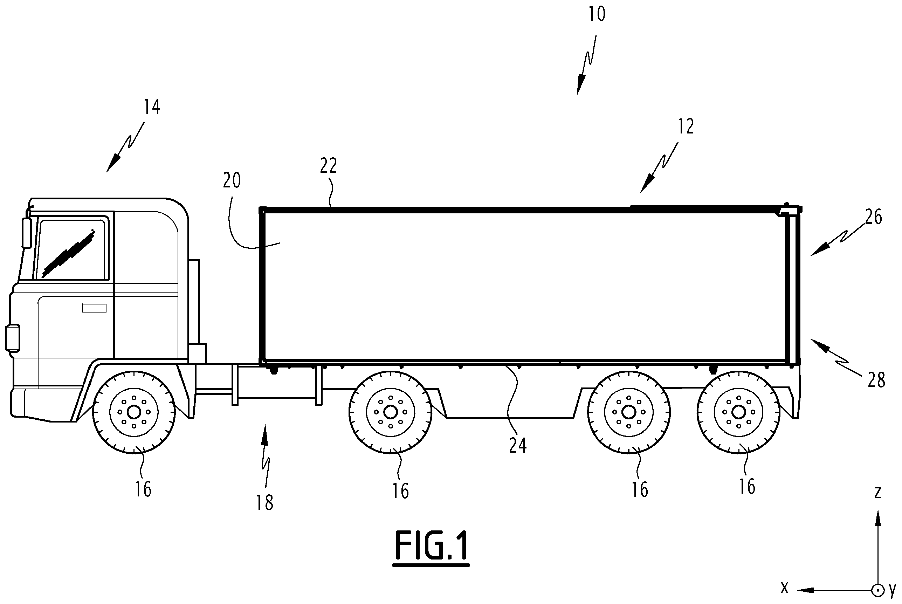

Le véhicule de transport de marchandise 10 représenté sur la Figure 1 consiste en un véhicule automobile, couramment appelé « camion », comportant un compartiment 12 destiné à recevoir des marchandises, une cabine 14, des roues 16, et un châssis 18.

Dans la suite, les termes d'orientation s'entendent en référence au repère d'orientation usuel des véhicules automobiles, représenté sur la Figure 1, et dans lequel on distingue :
- un axe longitudinal X, orienté de l'arrière vers l'avant, selon le sens de marche du véhicule 10,
- un axe transversal Y, orienté de la droite vers la gauche et formant avec l'axe X un plan horizontal, et
- un axe vertical Z, perpendiculaire au plan horizontal, orienté du bas vers le haut.

Comme visible sur la Figure 1, le compartiment 12 comporte deux flancs 20 verticaux espacés transversalement l'un de l'autre (seul le flanc 20 gauche apparaissant sur la Figure), un pavillon 22 horizontal reliant les bords supérieurs des deux flancs 20, et un plancher 24 reliant les extrémités inférieures des deux flancs 20. Les flancs 20, le pavillon 22 et le plancher 24 définissent ensemble une ouverture arrière 26 pour l'accès des marchandises à l'intérieur du compartiment 12.

Le compartiment 12 est en particulier un compartiment réfrigéré.

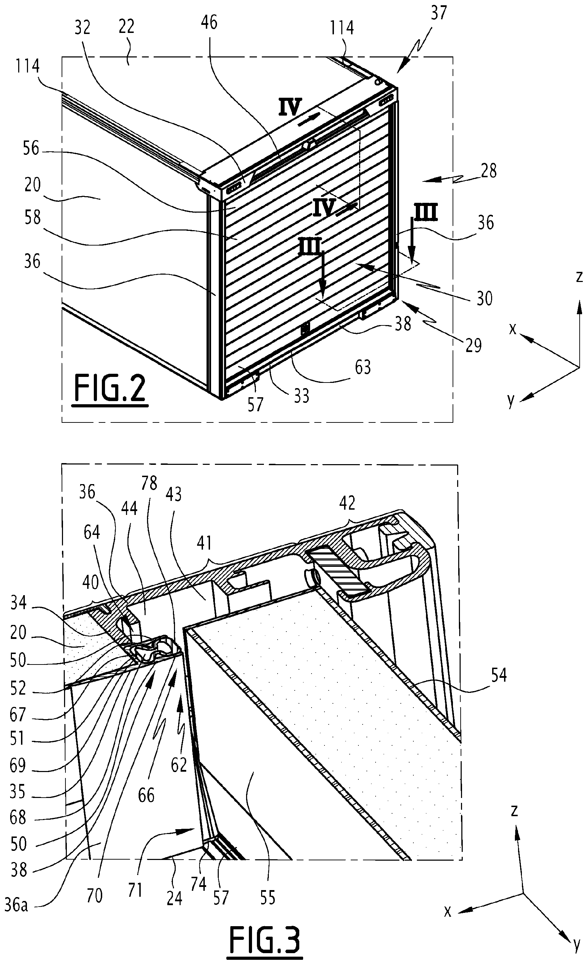

En référence à la Figure 2, le compartiment 12 comporte également une porte sectionnelle 28 propre à ouvrir et fermer sélectivement l'ouverture 26.

A cet effet, la porte sectionnelle 28 comporte un encadrement 29 encadrant l'ouverture 26, et un tablier 30 monté mobile relativement à l'encadrement 29 entre une position de fermeture, dans laquelle le tablier 30 obture l'ouverture 26, et une position d'ouverture, dans laquelle le tablier 30 est à l'écart de l'ouverture 26.

L'encadrement 29 présente une extrémité proximale 32 au niveau de laquelle le tablier 30 est positionné lorsqu'il est en position d'ouverture, et une extrémité distale 33 opposée à l'extrémité proximale 32.

L'encadrement 29 comprend un cadre extérieur 34 et un cadre intérieur 35.

Le cadre extérieur 34 comprend deux montants extérieurs latéraux 36, une traverse extérieure supérieure 37 et une traverse extérieure inférieure 38, les traverses supérieure et inférieure 37, 38 raccordant respectivement les extrémité supérieure et inférieure des deux montants 36. La traverse supérieure 37 définit ici l'extrémité proximale 32 de l'encadrement 30, et la traverse inférieure 38 définit l'extrémité distale 33.

En référence à la Figure 3, chaque montant 36 présente successivement, de l'avant vers l'arrière, une base 40 de raccordement à un flanc 20 respectif, une portion intermédiaire 41, et une portion terminale 42 définissant une extrémité arrière du montant 36. Ces base 40, portion intermédiaire 41 et portion terminale 42 sont de préférence formées ensemble d'une seule pièce, typiquement par extrusion.

Côté extérieur, la base 40, la portion intermédiaire 41 et la portion terminale 42 s'inscrivent dans le prolongement les unes des autres. La portion terminale 42 présente sensiblement la même largeur que le flanc 20, alors que la portion intermédiaire 41 présente une largeur inférieure. Ainsi, le montant 36 définit entre la portion terminale 42 et le flanc 20 une cavité 43, débouchant sur l'ouverture 26, propre à recevoir le tablier 30, la portion intermédiaire 41 formant le fond de ladite cavité 43.

Chaque montant 36 comporte également un rail de guidage 44 propre à guider le mouvement du tablier 30 entre ses positions d'ouverture et de fermeture. Ce rail 44 est venu d'une pièce avec la portion intermédiaire 41.

Ce rail de guidage 44 est positionné à l'intérieur de la cavité 43. Il présente une forme sensiblement rectiligne et s'étend sensiblement verticalement tout au long de la hauteur du montant 36, c'est-à-dire que l'angle formé entre le rail de guidage 44 et le plancher 24, autour de l'axe transversal Y, est compris entre 89,5 et 90,5°.

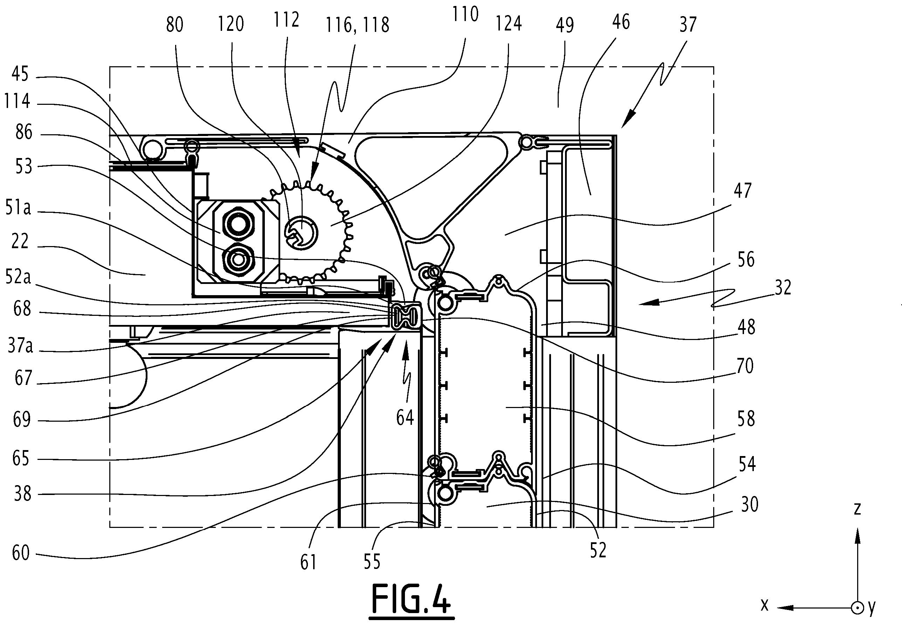

En référence à la Figure 4 maintenant, la traverse supérieure 37 présente une poutre transversale arrière 46 et définit, entre ladite poutre transversale arrière 46 et une tôle d'habillage 45 rapportée sur le pavillon 22, un passage 47 pour le tablier 30. Ce passage 47 débouche à travers une fente inférieure 48 dans une face inférieure de la traverse 37, et à travers une fenêtre supérieure 49 dans une face supérieure de la traverse 37, la fente 48 et la fenêtre 49 étant chacune allongée suivant la direction transversale Y.

De retour à la Figure 3, le cadre intérieur 35 est logé à l'intérieur du cadre extérieur 34. Il est en forme de « U » renversé et comprend deux montants intérieurs latéraux 36a formant les branches du « U » et une traverse intérieure supérieure 37a (Figure 4) formant le fond du « U ».

Chacun des montants intérieurs 36a comprend deux nervures verticales 50 faisant chacune saillie vers l'arrière depuis un bord arrière 51 d'un flanc 20 respectif et définissant entre elles une chambre 52. Lesdites nervures verticales 50 s'étendent en particulier sensiblement sur toute la hauteur du flanc 20 et sont logées dans la cavité 43 d'un montant extérieur 36 respectif.

Comme visible sur la Figure 4, la traverse intérieure supérieure 37a comprend quant à elle deux nervures horizontales 53 faisant chacune saillie vers l'arrière depuis un bord arrière 51a du pavillon 22 et définissant entre elles une chambre 52a. Lesdites nervures horizontales 53 s'étendent en particulier sur sensiblement toute la largeur du pavillon 22.

Avantageusement, les extrémités libres des nervures horizontales 53 et verticales 50 sont disposées dans un plan commun (non représenté) sensiblement vertical.

Toujours en référence à la Figure 4, le tablier 30 présente une face extérieure 54 qui, lorsque le tablier 30 est en position de fermeture, est orientée vers l'extérieur du compartiment 12, et une face intérieure 55 qui, lorsque le tablier 30 est en position de fermeture, est orientée vers l'intérieur du compartiment 12.

Le tablier 30 présente également une première extrémité 56 qui, lorsque le tablier 30 est en position de fermeture, forme une extrémité supérieure du tablier 30, et une deuxième extrémité 57 (Figure 2) opposée à la première extrémité 56 et qui, lorsque le tablier 30 est en position de fermeture, forme une extrémité inférieure 57 du tablier 30.

Le tablier 30 comporte une pluralité de lamelles 58 disposées successivement entre les première et deuxième extrémités 56, 57 et articulées les unes aux autres par des organes d'articulation 60.

Les lamelles 58 ont sensiblement une taille identique. Chacune est allongée suivant la direction transversale Y et s'étend toute la largeur de l'ouverture 26, ses extrémités transversales étant chacune reçue dans la cavité 43 d'un montant 36 respectif.

Chaque lamelle 58 est réalisée en un matériau plastique rigide, par exemple en Polycarbonate (PC), en Acrylonitrile butadiène styrène (ABS), ou en Acrylonitrile Styrène Acrylate (ASA). Dans une variante, elle est réalisée en un matériau métallique.

Chaque organe d'articulation 60 permet l'articulation d'une lamelle 58 respective par rapport à une lamelle 58 voisine. A cet effet, chaque organe d'articulation 60 est ici réalisé par une bande de matériau souple, typiquement de polyuréthane (PU), solidaire desdites lamelle 58 respective et lamelle 58 voisine. En particulier, ladite bande est ici coextrudée avec le matériau plastique rigide de la lamelle respective.

Le tablier 30 comporte également, pour chaque lamelle 58, deux organes de guidage 61, chacun propre à coopérer avec le rail de guidage 44 d'un montant 36 respectif pour guider les mouvements du tablier 30. A cet effet, chaque organe de guidage 61 est disposé à l'une des extrémités transversales de la lamelle 58 et est typiquement formé par une roulette insérée dans le rail de guidage 48 lorsque le tablier 30 est en position de fermeture.

De retour aux Figures 2 et 3, la porte sectionnelle 28 comporte également un système d'étanchéité 62 pour assurer l'étanchéité entre l'encadrement 29 et le tablier 30 lorsque le tablier 30 est en position de fermeture. Ce système d'étanchéité 62 comprend un joint inférieur 63 monté sur la deuxième extrémité 57 du tablier 30, et un joint gonflable 64 monté sur l'encadrement 29.

Le joint inférieur 63 est propre à coopérer avec l'encadrement 29 pour assurer l'étanchéité entre la deuxième extrémité 57 du tablier 30 et la traverse inférieure 38 lorsque le tablier 30 est en position de fermeture. A cet effet, le joint inférieur 63 s'étend de préférence toute la largeur du tablier 30. Ainsi, lorsque la porte sectionnelle 28 est en position de fermeture, le joint inférieur 63 est serré entre la deuxième extrémité 57 du tablier 30 et la traverse inférieure 38, ce qui assure une bonne étanchéité entre le tablier 30 et l'encadrement 29 au niveau de la deuxième extrémité 57.

Le joint gonflable 64 présente une forme en « U » renversé avec un tronçon horizontal 65 formant le fond du « U » et deux tronçons verticaux 66 formant les branches du « U ».

Le joint gonflable 64 est monté sur le cadre intérieur 35 de l'encadrement 29. Comme visible sur la Figure 3, chacun des tronçons verticaux 66 est ainsi disposé à l'intérieur du compartiment 12 par rapport aux rails de guidage 44. Ainsi, les rails de guidage 44 sont positionnés dans une zone « hors froid » qui évite que les organes de guidage 61 ne prennent en glace sur l'encadrement 29.

Chacun desdits tronçons 65, 66 est formé par une membrane élastique 67 définissant un canal intérieur 68 propre à recevoir du fluide sous pression et présentant une base 69 de fixation à l'encadrement 29 et, opposée à ladite base 69, une surface de contact 70 apte à appuyer contre la face intérieure 55 du tablier 30 lorsque ce dernier est en position de fermeture. La base 69 du tronçon horizontal 65 est en particulier logée dans la chambre 52 définie entre les nervures 53 de la traverse interne supérieure 37a, et la base 69 de chaque tronçon vertical 66 est en particulier logée dans la chambre 52 définie entre les nervures verticales 50 d'un montant intérieur 36a respectif.

La membrane élastique 67 est propre à occuper une position de repos, dans laquelle la membrane 67, et plus particulièrement la surface de contact 70, est à l'écart du tablier 30 fermé, lorsque le canal intérieur 68 est vide, c'est-à-dire à une pression inférieure ou égale à la pression atmosphérique, et une position déployée, dans laquelle la surface de contact 70 est plaquée contre la face intérieure 55 du tablier 30 fermé, lorsqu'un fluide sous pression, constitué de préférence par un gaz sous pression et typiquement par de l'air sous pression, est injecté dans le canal intérieur 68.

En particulier, la membrane élastique 67 est apte à être intégralement logée dans la chambre 52, 52a dans laquelle est logée sa base 69 lorsqu'elle est en position de repos.

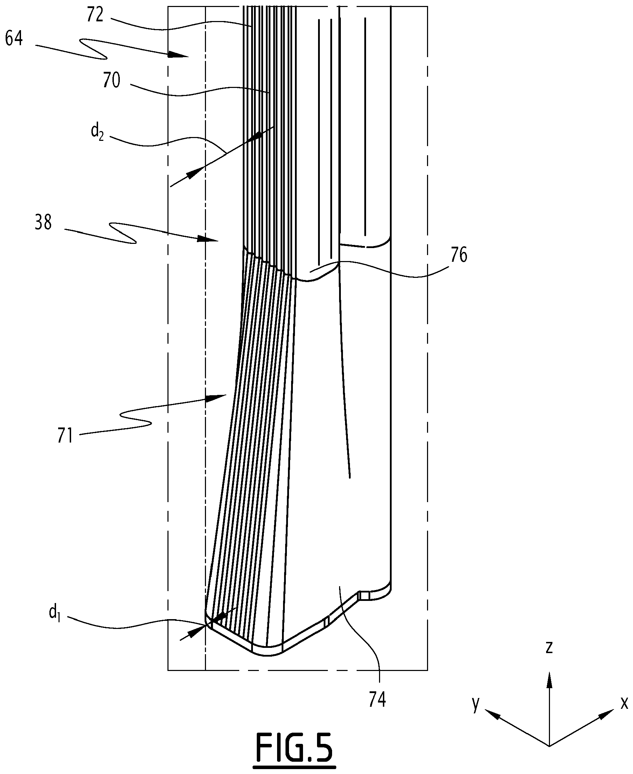

Par ailleurs, comme visible sur la Figure 5, la membrane 67 de chaque tronçon vertical 66 comporte, à son extrémité inférieure, un tronçon d'extrémité 71 adapté pour assurer un contact progressif de la surface de contact 70 avec le tablier 30, depuis le bas vers le haut. Ce tronçon d'extrémité 71 présente une extrémité inférieure 74 terminale et une extrémité supérieure 76 de liaison avec le reste de la membrane 67, et est conformé de sorte que, lorsque la membrane 67 est au repos, la distance de la surface de contact 70 au tablier 30 fermé augmente progressivement depuis une distance d₁ nulle au niveau de l'extrémité inférieure 74 jusqu'à une distance maximale d₂ au niveau de l'extrémité supérieure 76. Ladite distance maximale d₂ constitue avantageusement la distance de la surface de contact 70 au tablier 30 fermé le long du reste de la membrane 67.

La surface de contact 70 est avantageusement striée, comme représenté sur la Figure 5, les stries 78 étant par exemple orientées sensiblement parallèlement à la direction d'élongation du joint 64, c'est-à-dire la direction selon laquelle le joint 64 présente la plus grande dimension. Cela permet de limiter les risques de collage de la surface de contact 70 contre le tablier 30 dus au givrage.

Le joint gonflable 64 est en particulier continu, c'est-à-dire que le tronçon horizontal 65 est accolé à chacun des tronçons verticaux 66. En outre, les membranes 67 des différents tronçons 65, 66 sont avantageusement constituées par une unique membrane continue commune auxdits tronçons 65, 66. Cela permet d'assurer une étanchéité continue sur tout le contour de la porte 28.

De retour à la Figure 4, la porte sectionnelle 28 comprend également un élément obturateur 110 pour obturer la fenêtre 49 lorsque le tablier 30 est dans sa position de fermeture, et un système d'entraînement 112 pour déplacer le tablier 30 entre ses positions d'ouverture et de fermeture.

L'élément obturateur 110 est en particulier formé par un volet articulé à l'extrémité supérieure de la lamelle 58 la plus haute et à au moins un rail 114, en particulier deux rails 114, monté chacun sur une face supérieure du pavillon 22. Cela permet à l'élément obturateur 110 de contribuer au guidage du tablier 30 entre ses positions d'ouverture et de fermeture tout en dégageant d'éventuels objets encombrants disposés sur le pavillon 22.

Le système d'entraînement 112 est disposé dans le passage 47 défini par la traverse supérieure 37. L'épaisseur du système d'entraînement 112 est avantageusement inférieure à l'épaisseur du pavillon 22.

Le système d'entraînement 112 comporte un module d'équilibrage 116 propre à contrebalancer le poids du tablier 30, et un module de motorisation 118 propre à entraîner les mouvements du tablier 30 entre ses positions d'ouverture et de fermeture.

Le module d'équilibrage 116 comporte un arbre d'équilibrage 120 s'étendant sensiblement parallèlement à la traverse supérieure 37, et un ressort de torsion 122 enroulé sur l'arbre d'équilibrage 120 et apte à générer un contre-couple pour contrebalancer le poids du tablier 30. Le module d'équilibrage 116 comporte également un pignon 124, et une liaison (non-représentée) entre la lamelle 58 et l'arbre d'équilibrage 120.

L'arbre d'équilibrage 116 a avantageusement la même longueur que la traverse supérieure 37.

La liaison est par exemple une chaîne engrenée sur le pignon 124.Le pignon 124 est propre à tirer la chaîne pour entraîner le mouvement du tablier 30 entre ses positions de fermeture et d'ouverture. La rotation du pignon 124 est transformée en un mouvement de translation de la chaîne.

Le module de motorisation 118 est formé par un moteur 126 propre à entraîner l'arbre d'équilibrage 120 en rotation autour de son axe.

La porte sectionnelle 28 est utilisée de la manière décrite ci-dessous.

Tout à bord, la porte sectionnelle 28 est dans une configuration ouverte. Le tablier 30 est à l'écart de l'ouverture 26, en position d'ouverture. Les lamelles 58 sont disposées horizontalement sur le pavillon 22, et la membrane élastique 67 du joint 64 est en position de repos, le canal intérieur 68 étant vide.

Lorsqu'une commande de fermeture du tablier 30 est donnée à la porte sectionnelle 28, par exemple au moyen d'une télécommande, le moteur 126 commence à tourner et la liaison engrenée sur le pignon 124 entraîne le mouvement du tablier 30 en translation. Ce faisant, le tablier 30 commence à se déplacer depuis sa position d'ouverture vers sa position de fermeture.

L'élément obturateur 110 glisse dans les rails 114 sur le pavillon 22 et guide le mouvement du tablier 30 dans un sens sensiblement orthogonal à la traverse supérieure 37. Les lamelles successives 58 se déplacent sur le pavillon 22 vers la position de fermeture, et chaque lamelle 58 traverse successivement le passage 47.

Lorsque chaque lamelle 58 sort du passage 47, les organes de guidage 61 de ladite lamelle 58 entrent dans les rails de guidage 44. Ce faisant, lesdits organes de guidage 61 commencent à coopérer avec les rails de guidage 44 et guident le mouvement de la lamelle 58 dans un sens sensiblement vertical.

Les différentes lamelles 58 du tablier 30, articulées les unes aux autres par les organes d'articulation 60, entrent successivement en position sensiblement verticale puis descendent, obstruant ainsi au fur et à mesure l'ouverture 26.

La descente du tablier 30 se poursuivant, le tablier 30 atteint finalement sa position de fermeture dans laquelle le tablier 30 obstrue entièrement l'ouverture 26. Le joint inférieur 63 vient alors en appui contre la traverse inférieure 38, et assure l'étanchéité entre la deuxième extrémité 57 du tablier 30 et la traverse inférieure 38.

Simultanément, lorsque le tablier 30 atteint sa position de fermeture, l'élément obturateur 110 ferme la fenêtre 49.

Une fois que le tablier 30 a atteint sa position de fermeture, un fluide sous pression est injecté dans le canal intérieur 68 de la membrane 67 du joint 64. Sous la pression du fluide, la membrane 67 commence à se dilater progressivement.

D'abord, la surface de contact 70 entre en appui avec la face intérieure 55 du tablier 30 près des extrémités inférieures 74 des tronçons d'extrémité 71. L'injection du fluide sous pression se poursuivant, la surface de contact 70 s'approche progressivement de la face intérieure 55, depuis l'extrémité inférieure 74 jusqu'à l'extrémité supérieure 76 de chaque tronçon d'extrémité 71, la surface de contact 70 se déplaçant, le long du reste de la membrane 67, sensiblement simultanément à l'extrémité supérieure 76 de chaque tronçon d'extrémité 71. La distance entre la membrane 67 et la face intérieure 55 diminue ainsi jusqu'au zéro.

La totalité de la surface de contact 70 de la membrane 67 est alors en appui avec la face intérieure 55.

Avec le joint inférieur 63 s'appuyant sur la traverse inférieure 38,.le jeu entre le tablier 30 et l'encadrement 29 est alors annulé, ce qui permet d'obtenir une étanchéité complète entre l'encadrement 29 et le tablier 30 sur toute la périphérie du tablier 30.

Après le gonflage complet de la membrane 67, l'injection du fluide est automatiquement arrêtée.

Grâce à l'invention décrite ci-dessus, le joint 64 en position déployée maintient le tablier 30 en position de fermeture et évite des vibrations préjudiciables du tablier 30 lorsque le véhicule 10 est en mouvement.

De plus, une meilleure étanchéité du compartiment réfrigéré 12 est rendue possible, ce qui réduit de la consommation d'énergie.

En outre, la disposition intérieure du joint gonflable 64 permet que les roulettes 61 soient hors froid, ce qui limite les risques de prise en glace desdites roulettes 61 et les difficultés éventuelles de leurs roulements dans le rail de guidage 44.

Par ailleurs, la configuration des rails verticaux 44 permet une conception simple et évite des réglages d'excentriques.

Pour finir, la configuration striée de la surface de contact 70 réduit les risques de collage dus au givrage entre le joint 64 et le tablier 30.

## Revendications

1. Compartiment (12) de transport de marchandises comprenant deux flancs (20) et un pavillon (22) reliant les deux flancs (20), les flancs (20) définissant entre eux une ouverture (26) pour l'accès des marchandises à l'intérieur du compartiment (12), le compartiment (12) comprenant en outre une porte sectionnelle (28) pour sélectivement ouvrir et fermer ladite ouverture (26),
ladite porte sectionnelle (28) comprenant un encadrement (29) encadrant une ouverture (26), et un tablier (30) formé d'une pluralité de lamelles (58) successives articulées les unes aux autres et monté mobile relativement à l'encadrement (29) entre une position de fermeture, dans laquelle il obture l'ouverture (26), et une position d'ouverture, dans laquelle il est à l'écart de l'ouverture (26), le tablier (30) de ladite porte sectionnelle (28) présentant une face intérieure (55) orientée vers l'intérieur du compartiment (12),
la porte sectionnelle (28) comprenant également un joint gonflable (64) monté sur l'encadrement (29) à la périphérie de l'ouverture (26), le joint gonflable (64) comprenant une membrane élastique (67) définissant un canal intérieur (68), ladite membrane élastique (67) étant adaptée pour occuper une position de repos à l'écart du tablier (30) lorsque le canal intérieur (68) est vide, et pour se dilater de manière à occuper une position déployée en appui contre le tablier (30) en position de fermeture lorsqu'un fluide sous pression est injecté dans le canal intérieur (68),
**caractérisé en ce que** le joint gonflable (64) est positionné de manière à appuyer contre ladite face intérieure (55) lorsque la membrane élastique (67) est en position déployée et le tablier (30) en position de fermeture.

2. Compartiment (12) de transport de marchandises selon la revendication 1, dans laquelle le joint gonflable (64) présente une surface de contact (70) qui, lorsque la membrane élastique (67) est en position déployée et le tablier (30) en position de fermeture, est en appui contre le tablier (30).

3. Compartiment (12) de transport de marchandises selon la revendication 2, dans laquelle la membrane (67) comporte un tronçon d'extrémité (71) présentant une extrémité terminale (74) et une extrémité (76) de liaison avec le reste de la membrane (67), ledit tronçon d'extrémité (71) étant conformé de sorte que, lorsque la membrane (67) est au repos, la distance de la surface de contact (70) au tablier (30) fermé augmente progressivement depuis une distance (di) nulle au niveau de l'extrémité terminale (74) jusqu'à une distance maximale (d₂) au niveau de l'extrémité de liaison (76).

4. Compartiment (12) de transport de marchandises selon la revendication 2 ou 3, dans laquelle la surface de contact (70) est striée.

5. Compartiment (12) de transport de marchandises selon la revendication 4, dans laquelle la surface de contact (70) est striée de stries (78) orientées sensiblement parallèlement à une direction d'élongation du joint gonflable (64).

6. Compartiment (12) de transport de marchandises selon l'une quelconque des revendications précédentes, dans lequel le tablier (30) comporte également, pour chaque lamelle (58), deux organes de guidage (61) pour guider les mouvements du tablier (30), chaque organe de guidage (61) étant disposé à une extrémité transversale d'une lamelle (58) du tablier (30).

7. Véhicule (10) de transport de marchandises comprenant un compartiment (12) selon l'une quelconque des revendications précédentes.

## Patentansprüche

1. Raum (12) für den Transport von Waren, aufweisend zwei Seitenteile (20) und ein Oberteil (22), das die beiden Seitenteile (20) verbindet, wobei die Seitenteile (20) zwischen einander eine Öffnung (26) für den Zugang der Waren zum Inneren des Raums (12) definieren, wobei der Raum (12) ferner eine Sektionaltür (28) zum selektiven Öffnen und Schließen der Öffnung (26) aufweist,
wobei die Sektionaltür (28) einen Rahmen (29), der eine Öffnung (26) umrahmt, und eine Schutzwand (30) aufweist, die aus einer Mehrzahl von aufeinanderfolgenden Lamellen (58) gebildet ist, die gelenkig miteinander verbunden sind, und relativ zum Rahmen (29) zwischen einer Schließposition, in der sie die Öffnung (26) verschließt, und einer Öffnungsposition, in der sie von der Öffnung (26) entfernt ist, bewegbar montiert ist, wobei die Schutzwand (30) der Sektionaltür (28) eine Innenseite (55) aufweist, die in Richtung zum Inneren des Raums (12) ausgerichtet ist,
wobei die Sektionaltür (28) ferner eine aufblasbare Dichtung (64) aufweist, die am Umfang der Öffnung (26) an dem Rahmen (29) montiert ist, wobei die aufblasbare Dichtung (64) eine elastische Membran (67) aufweist, die einen inneren Kanal (68) definiert, wobei die elastische Membran (67) angepasst ist, um eine von der Schutzwand (30) entfernte Ruheposition einzunehmen, wenn der innere Kanal (68) leer ist, und um sich auszudehnen, um eine Entfaltungsposition in Anlage an die Schutzwand (30) in der Schließposition einzunehmen, wenn ein Fluid unter Druck in den inneren Kanal (68) gespritzt wird,
**dadurch gekennzeichnet, dass** die aufblasbare Dichtung (64) positioniert ist, um an der Innenseite (55) anzuliegen, wenn die elastische Membran (67) in der Entfaltungsposition ist und die Schutzwand (30) in der Schließposition ist.

2. Raum (12) für den Transport von Waren gemäß Anspruch 1, wobei die aufblasbare Dichtung (64) eine Kontaktfläche (70) aufweist, die, wenn die elastische Membran (67) in der Entfaltungsposition ist und die Schutzwand (30) in der Schließposition ist, an der Schutzwand (30) anliegt.

3. Raum (12) für den Transport von Waren gemäß Anspruch 2, wobei die Membran (67) einen Endabschnitt (71) mit einem Abschlussende (74) und einem Ende (76) zum Verbinden mit dem Rest der Membran (67) aufweist, wobei der Endabschnitt (71) derart angepasst ist, dass, wenn die Membran (67) in der Ruheposition ist, der Abstand der Kontaktfläche (70) zu der geschlossenen Schutzwand (30) allmählich von einer Nulldistanz (d₁) am Abschlussende (74) bis zu einer Maximaldistanz (d₂) am Verbindungsende (76) zunimmt.

4. Raum (12) für den Transport von Waren gemäß Anspruch 2 oder 3, wobei die Kontaktfläche (70) gerillt ist.

5. Raum (12) für den Transport von Waren gemäß Anspruch 4, wobei die Kontaktfläche (70) mit Rillen (78) gerillt ist, die im Wesentlichen parallel zu einer Dehnungsrichtung der aufblasbaren Dichtung (64) ausgerichtet sind.

6. Raum (12) für den Transport von Waren gemäß irgendeinem der vorhergehenden Ansprüche, wobei die Schutzwand (30) ferner für jede Lamelle (58) zwei Führungselemente (61) zum Führen der Bewegungen der Schutzwand (30) aufweist, wobei jedes Führungselement (61) an einem transversalen Ende einer Lamelle (58) der Schutzwand (30) angeordnet ist.

7. Fahrzeug (10) zum Transportieren von Waren, aufweisend einem Raum (12) gemäß irgendeinem der vorhergehenden Ansprüche.

## Claims

1. Goods transport compartment (12), comprising two sides (20) and a roof (22) connecting the two sides (20), the sides (20) defining therebetween an opening (26) for accessing goods inside the compartment (12), the compartment (12) further comprising a sectional door (28) for selectively opening and closing said opening (26),
said sectional door (28) comprising a frame (29) framing an opening (26), and a panel (30) which is formed of a plurality of consecutive slats (58) hinged to one other and is movably mounted relative to the frame (29) between a closed position, in which said panel closes the opening (26), and an open position, in which said panel is away from the opening (26), the panel (30) of said sectional door (28) having an inner face (55) facing inside the compartment (12),
the sectional door (28) also comprising an inflatable seal (64) mounted on the frame (29) at the periphery of the opening (26), the inflatable seal (64) comprising a resilient membrane (67) defining an inner channel (68), said resilient membrane (67) being suitable for occupying a rest position away from the panel (30) when the inner channel (68) is empty, and for expanding so as to occupy an expanded position in which it bears against the panel (30) in the closed position when a pressurised fluid is injected into the inner channel (68),
**characterised in that** the inflatable seal (64) is positioned so as to bear against said inner face (55) when the resilient membrane (67) is in the expanded position and the panel (30) is in the closed position.

2. Goods transport compartment (12) according to claim 1, wherein the inflatable seal (64) has a contact surface (70) which, when the resilient membrane (67) is in the expanded position and the panel (30) is in the closed position, bears against the panel (30).

3. Goods transport compartment (12) according to claim 2, wherein the membrane (67) has an end portion (71) having a terminal end (74) and an end (76) for connection to the rest of the membrane (67), said end portion (71) being shaped such that when the membrane (67) is at rest, the distance from the contact surface (70) to the closed panel (30) gradually increases from a zero distance (di) at the terminal end (74) up to a maximum distance (d₂) at the connection end (76).

4. Goods transport compartment (12) according to either claim 2 or claim 3, wherein the contact surface (70) is ridged.

5. Goods transport compartment (12) according to claim 4, wherein the contact surface (70) is ridged with ridges (78) oriented substantially in parallel with an elongation direction of the inflatable seal (64).

6. Goods transport compartment (12) according to any of the preceding claims, wherein the panel (30) also has, for each slat (58), two guide members (61) for guiding the movements of the panel (30), each guide member (61) being arranged at a transverse end of a slat (58) of the panel (30).

7. Goods transport vehicle (10), comprising a compartment (12) according to any of the preceding claims.
